Europäisches Patentamt

European Patent Office

Office européen des brevets

(11) Publication number: **0 423 422 A1**

# EUROPEAN PATENT APPLICATION

(21) Application number: **90109366.6**

(51) Int. Cl.⁵: **B62K 21/26**

(22) Date of filing: **17.05.90**

(30) Priority: **14.10.89 JP 119839/89**

(43) Date of publication of application:
**24.04.91 Bulletin 91/17**

(84) Designated Contracting States:
**BE DK FR IT NL SE**

(71) Applicant: **Nakamura, Yukio**
**5-6, 1-Chome, Tengachayakita, Nishinari-Ku**
**Osaka-Shi, Osaka-Fu(JP)**

(72) Inventor: **Nakamura, Yukio**
**5-6, 1-Chome, Tengachayakita, Nishinari-Ku**
**Osaka-Shi, Osaka-Fu(JP)**

(74) Representative: **Kraus, Walter, Dr. et al**
**Patentanwälte Kraus, Weisert & Partner**
**Thomas-Wimmer-Ring 15**
**W-8000 München 22(DE)**

(54) Steering handle grip for ground vehicles.

(57) The present invention relates to a steering handle grip (G) to be attached to the steering handle bar (36) of a bicycle, motorcycle or other ground vehicle, including a grip body (37) made from an elastically deformable material such as synthetic resin or rubber and having a thickness and length such that it can be held by one hand, and a pair of operator's hand stopping flanges (45, 46) of large diameter bulging continuously and integrally from the longitudinal opposite ends of the grip body, the handle grip being characterized in that:

the grip body (37) is egg-shaped (specially elliptic) in cross-section, having opposed front and rear arcuate surfaces (37f, 37r) positioned on the major axis (Y-Y), the front arcuate surface (37f) being contacted by the second through fifth fingers of the operator's hand, the rear arcuate surface (37r) being contacted by the palm,

an attaching port (38) for attachment to the handle bar, the attaching port opening at an eccentric position deviated toward the rear arcuate surface (47r) along the major axis of the grip body,

wherein the thickness (T1) of the front region defined between the inner wall surface of the attaching port and the front arcuate surface is greater than the respective thicknesses (T2, T3, T4) of the remaining regions, and

wherein the thickened front region is formed with a plurality of dot-like through-holes (39) substantially orthogonal to the major axis of the grip body.

Thus, when the operator steers the ground vehicle, his hands intimately fit the steering handle grips, whereby the handle grips can be held stably and firmly in hands and even subtle movements of the fingers can be effectively transmitted to the handle grips to orient the vehicle as desired.

EP 0 423 422 A1

Xerox Copy Centre

## STEERING HANDLE GRIP FOR GROUND VEHICLES

### BACKGROUND OF THE INVENTION

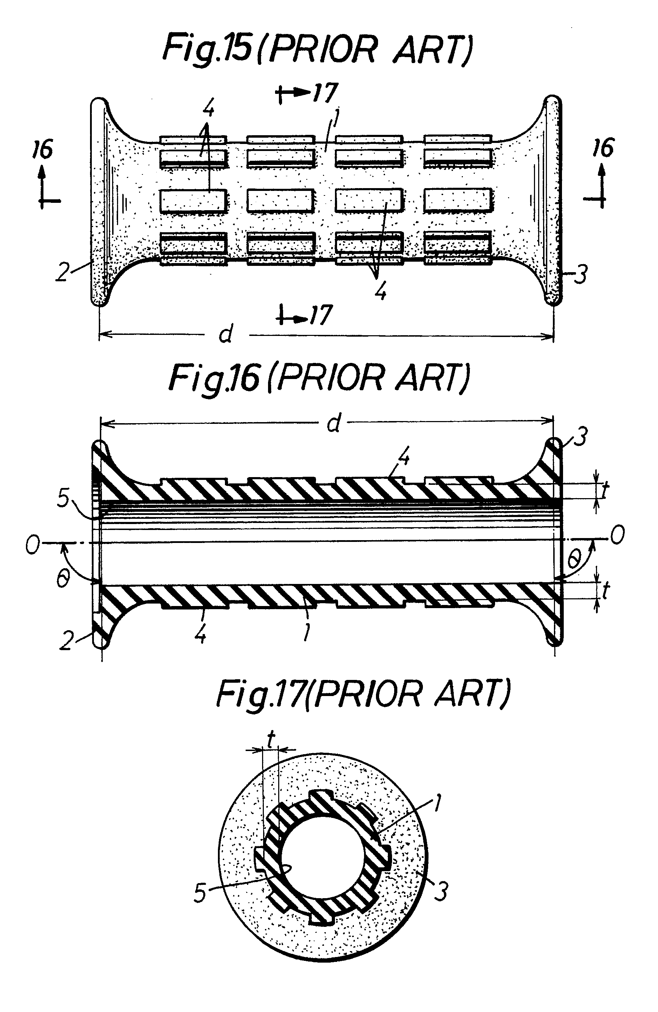

However, conventional handle grips attached to the steering handle bars of bicycles, motorcycles, tricycles and other ground vehicles are constructed in the manner shown in Figs. 15 through 17, which illustrate a typical example thereof, wherein a grip body 1 is made from an elastic resin, such as relatively hard rubber or synthetic resin, in a simple cylindrical form having a thickness and length such that it can be gripped by one hand, with a pair of operator's hand stopping flanges 2 and 3 integrally extending from the longitudinal opposite ends and with a number of slip-preventive ridges 4 distributed at predetermined intervals. There is also a known handle grip having recesses instead of ridges 4; in either case, they serve to roughen the surface. As for the stopping flanges 2 and 3, those which are elliptic are also known, and their grip bodies 1 are also circular in cross section.

Therefore, there must be said to be various problems to be solved.

That is, generally the grip body of a handle grip is gripped by the palm and five fingers of operator's one hand so as to be covered from above. And thicker handle grips can be griped more strongly and stably than thinner ones. Since the grip body 1 of said conventional article has a circular cross-section, it is difficult, as considered from human engineering, to fit the palm and five fingers of operator's hand naturally and closely around the circumferential surface of the grip body 1, thus decreasing the feeling of unity with the vehicle and the feeling of stable fitness.

Anatomically, man's five fingers each have a plurality of joints, and of two adjacent distances between adjacent joints (or the bending lengths of the phalanxes), the one spaced more from the root toward the tip of each finger is shorter. Therefore, when the grip body 1 is gripped by the bending action of tle phalanxes, none of the five fingers bend in a circular arc. In the gripping state, the skin of the palm and five fingers only seemingly extends along the circumferential surface of the grip body 1. Therefore, the operator has to move his wrists and arms more strongly than necessary when steering the vehicle.

That is, the grip body 1 of the conventional article can develop no other performance than stabilizing the operator's body in connection with the vehicle. This also applies to the case where the grip body 1 is made thicker, so long as its cross section forms a circle.

Furthermore, in the conventional grip body 1, the attaching port 5 for attachment to the handle bar extends exactly along the longitudinal axis O-O; thus, its wall thickness t is uniform throughout. The slip preventive ridges 4 described above are the same in height, having no other function than increasing the coefficient of friction with respect to the operator's hand. The fact that the wall thickness t is uniform throughout means that the degree of elastic deformation of the circumferential surface of the grip body 1 is also uniform throughout.

Therefore, the circumferential surface of the grip body 1 does not smoothly deform in response to local movements of the operator's hand gripping the grip body 1. For this reason and also because of the circular cross section, the operator's hand tends to be fatigued and, furthermore, control on the direction of travel of the vehicle cannot be properly effected.

In other words, the respective movements of the five fingers and palm of the operator's hand cannot directly, subtly and correctly reflect the movement of the grip body 1. In this sense, even if the grip body 1 is made from an elastic material, such as rubber of synthetic resin, it will not differ from a rigid grip body. That is, the grip body 1 of the conventional article is not a design with consideration given even to the movements of the five fingers and palm of the operator's hand.

Further, the pair of operator's hand stopping flanges 2 and 3 extending from the grip body 1 of the conventional article have a predetermined width and are in the form of annuluses extending at a right angle $\theta$ with respect to the longitudinal center line O-O of the grip body 1.

That is, the distance d between the flanges 2 and 3 is constant whether it is measured at the front or the rear. This means that the flanges are parallel only. Furthermore, as it is mentioned above that the wall thickness t on the circumferential surface of the grip body 1 is uniform throughout, the circumferential surface forms a surface which is parallel to the longitudinal center line O-O of the grip body 1.

However, since the handle bar is bent in the rearwardly diverging figure

"/\",

it is comfortable, as considered from human engineering, for the operator to dispose his arms in conformity to the rearwardly diverging figure when gripping the grip body 1. It is also seen that when a man's hand is opened with its five fingers extending side by side in parallel relation to each other, it is seen that the width gradually increases from the region defined by the finger tips to the palm region. In this respect, the flanges 2 and 3 of the conventional article are not suited to the operator's hand and very difficult to use, causing a feeling of incongruity.

The grip body 1 of the conventional article is only provided with a plurality of ridges 4 distributed over the entire circumferential surface to serve as slip-preventive means for the operator's hand. That is, there is only one pattern of ridges 4 for roughening the circumferential surface, and there is no partitioning projection for separating the second through fifth fingers from the first finger of the operator's hand.

Thus, if the operator's body is subjected to a swinging force out when driving the vehicle in a curve, the operator's hand gripping the handle grip tends to slip laterally outward longitudinally of the grip body 1, and it is difficult to operate the brake operating lever and buzzer in a stabilized manner by the second finger of the hand gripping the grip body.

SUMMARY OF THE INVENTION

The present invention has been accomplished to solve such problems. Accordingly, a first object of the invention is to provide an arrangement wherein the grip body to be gripped by the operator's hand is made from an elastic material and its cross section has an egg shape (special ellipse) with opposed front and rear arcuate surfaces positioned on the major axis and opposed to each other, the radius of curvature of the front arcuate surface being shorter than that of the rear arcuate surface, and wherein in consideration of attachment to a handle bar, the grip body is designed so that the second through fifth fingers, excluding the thumb, of the operator's hand contact the front arcuate surface while the palm of the operator's hand contacts the rear arcuate surface, whereby the surface area of the grip body is increased and, in an anatomical aspect, the entire surface is suited to changes in the bending lengths of man's phalanxes to ensure that the operator's hand intimately fits the surface of the grip body when the latter is gripped in a natural manner.

While the front arcuate surface of the grip body is presented for contact by the second through fifth fingers of the operator's hand and the rear arcuate surface for contact by the palm of the operator's hand, if the grip body is attached to the handle bar such that the major axis of the grip body of egg-shaped cross section lies on an imaginary extension line of each of the operator's arms extended for gripping the steering handle bar, then a force for directing the vehicle can be properly applied to the handle bar.

A second object of the invention is to provide an arrangement wherein the attaching port in the grip body for attachment to the handle bar is positioned on the major axis of the grip body of egg-shaped cross section and opens to an eccentric position deviated toward the rear arcuate surface, wherein the thickness of the front region defined between the front arcuate surface and the inner wall surface of the attaching port of the grip body is locally greater than that of the remaining regions, said specially thickened front region being formed with a plurality of dot-like through-holes substantially orthogonal to the major axis, whereby whereas the grip body itself is made from a material of limited elasticity, the elastic deformability of the front arcuate surface to be contacted by the second through fifth fingers of the operator's hand is locally increased to a great extent, thus making it possible to apply even subtle movements of the fingers of the operator's hand directly and naturally to the grip body.

A third object of the invention is to provide an arrangement wherein the rear arcuate surface of the grip body is formed with a plurality of furrows serving as slip-preventive means for the operator's hand so that they are parallel with each other in orthogonal relation to the longitudinal center line of the attaching port of the grip body, and wherein the thickness of the rear region defined between the rear arcuate surface and the inner wall surface of said attaching port is changed so that it is gradually increased as the longitudinal middle of the grip body is approached so as to form the rear arcuate surface of the grip body into a convex surface bulging backward, thereby ensuring that the palm of the operator's hand rationally and intimately fits the rear arcuate surface of the grip body to hold the grip body without danger of slippage.

A fourth object of the invention is to provide an arrangement wherein a pair of operator's hand stopping flanges of large diameter bulging integrally from the longitudinally opposite ends of the grip body, said flanges having an egg shape similar to the cross-sectional shape of the grip body, the bulging planes of said flanges crossing the longitudinal center line of the attaching port of the grip body at angles other than right angle so that the flanges look like the rearwardly diverging figure

"⁄\"

as seen in plan view, thereby making it possible for the operator's hands to grip the grip bodies attached to the handle bar in a comfortable posture as considered from human engineering.

A fifth object of the invention is to provide an arrangement wherein a partitioning projection for separating the second finger from the three of the third through fifth fingers bulges integrally from the middle of the front arcuate surface of the grip body, thereby reliably preventing lateral slippage of the operator's hand and enabling the operator, gripping the grip body in a stable manner by the three of the third through fifth fingers and the thumb, to stretch his second finger forwardly to smoothly manipulate the brake operating lever and buzzer attached to the handle bar.

Other objects of the invention together with the construction thereof will appear from the detailed description of preferred embodiments of the invention.

BRIEF DESCRIPTION OF THE DRAWINGS

Fig. 1 is an overall diagrammatic side view of a bicycle according to an embodiment of the invention;

Fig. 2 is an enlarged plan view showing how handle grips are attached to the steering handle bar of the vehicle;

Fig. 3 is a full-scale plan view of one such handle grip;

Fig. 4 is a rear view;

Fig. 5 is a front view;

Figs. 6 and 7 are right side and left side views, respectively;

Figs. 8 and 9 are sectional views taken along the lines 8-8 and 9-9 in Fig. 3, respectively;

Fig. 10 is a sectional view taken along the line 10-10 in Fig. 4;

Fig. 11 is a plan view, in section, corresponding to Fig. 10, showing the handle grip attached to the handle bar;

Fig. 12 is a side view, in section, corresponding to Fig. 9, showing how the handle grip is gripped;

Fig. 13 is a plan view suggesting how the brake operating lever is manipulated by the hand gripping the handle grip;

Fig. 14 is a plan view of a modification of the handle grip corresponding to Fig. 3, not having a partitioning projection for fingers;

Fig. 15 is a plan view of a conventional handle grip; and

Figs. 16 and 17 are sectional views taken along the lines 16-16 and 17-17 in Fig. 15.

DETAILED DESCRIPTION OF THE PREFERRED EMBODIMENTS

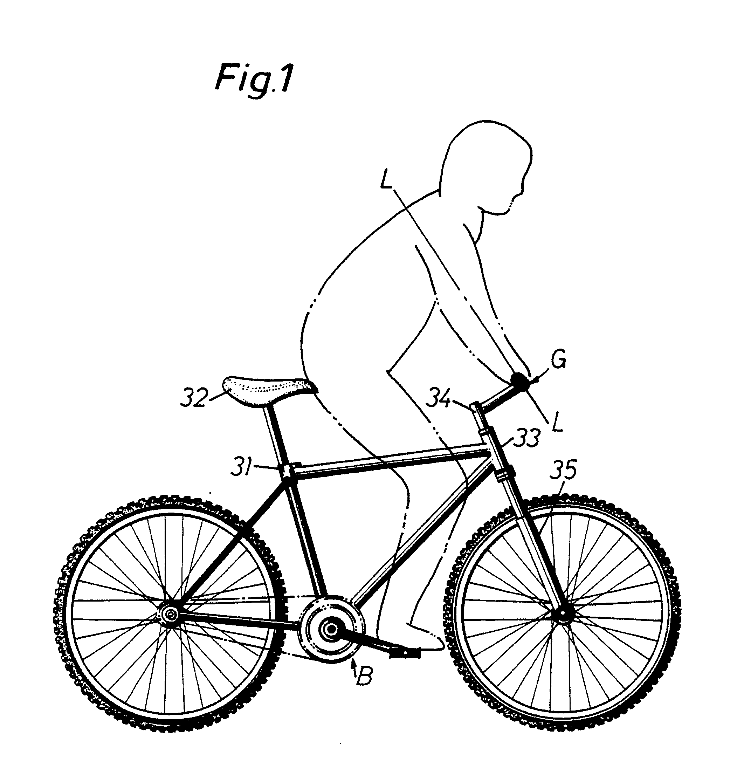

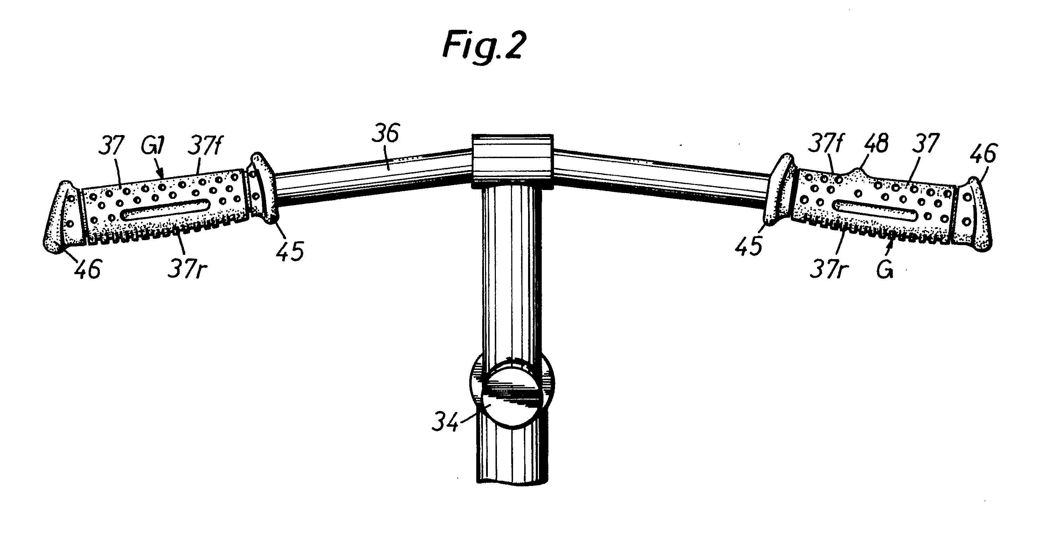

The construction of the invention will now be described with reference to the accompanying drawings. Figs. 1 and 2 show the steering handle bar of a terrain traveling bicycle (or so-called all-terrain bike). The character B generally indicates a vehicle having a seat post 31 provided with a seat 32 for a rider to sit on. The front pipe 33 of the vehicle B has a handle post 34 turnably extending therethrough. The numeral 35 denotes a front fork continuous with the lower end of the handle post 34, and 36 denotes a handle bar integrally attached to the upper end of said post 34. There are various types of handle bars having different bent forms, but at any rate they are bent to diverge rearward in the form of the rearwardly diverging figure

" ∕ \ "

as seen in plan view.

As a result, it is possible for the rider to steer the vehicle B by moving his hands right and left gripping the handle bar at opposite ends. In addition, though not shown, the handle bar 36 is equipped with brake operating levers and a buzzer.

The character G generally indicates a steering handle grip to which the invention is directed. It is made from a suitably elastically deformable material, such as polyvinyl chloride, silicone resin or other synthetic resin, or rubber; in use, a pair of such handle grips are attached symmetrically to the opposite ends of the handle bar 36.

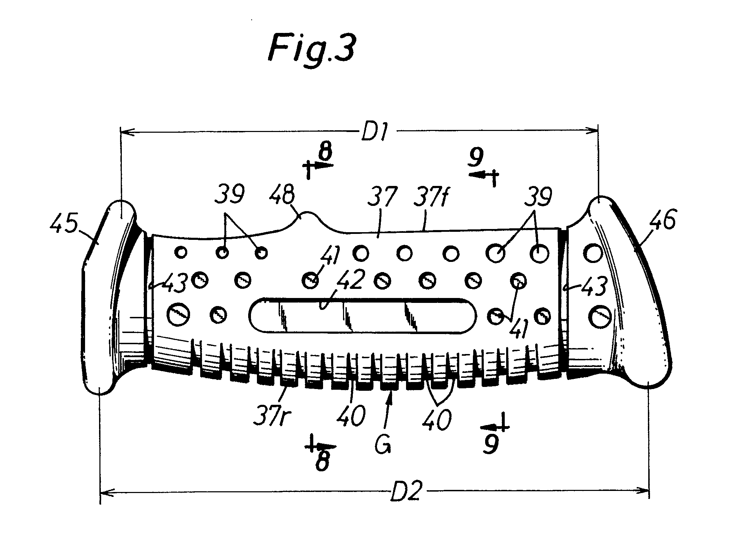

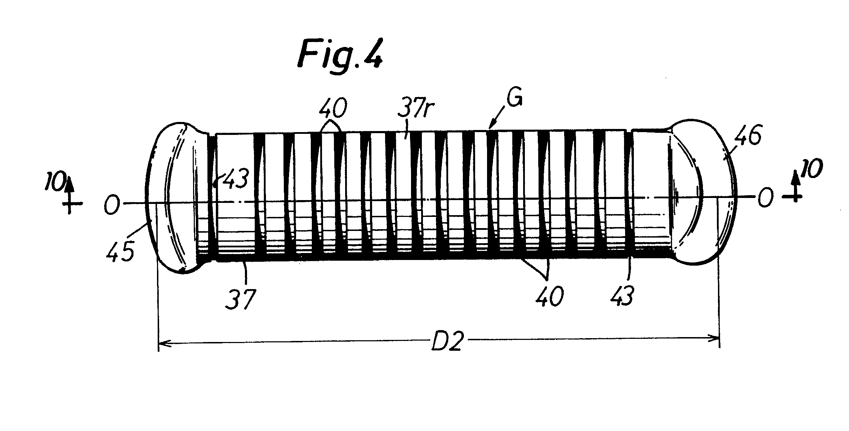

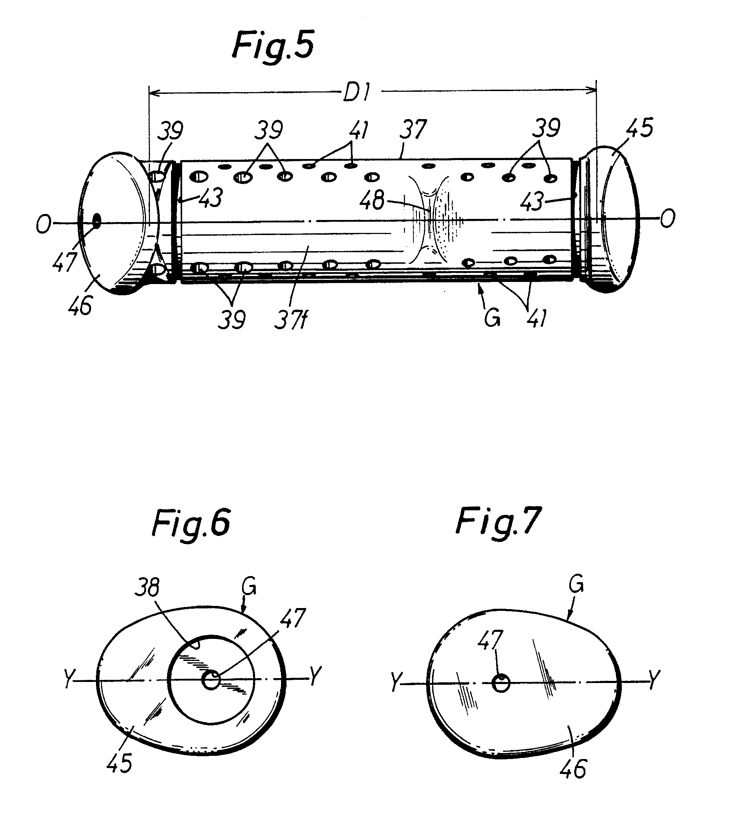

The pair of handle grips G are of the same configuration, and one of them is singled out and shown enlarged in Figs. 3 through 13 and will now be described in detail. The numeral 37 denotes a grip body having a given thickness and length such that it can be gripped by one hand, the cross section thereof having an egg shape (special ellipse).

Concerning the cross-sectional shape of the grip body 37, the radii of curvature of the opposed front and rear arcuate surfaces 37f and 37r positioned on the major axis Y-Y are not equal to each other but the front arcuate surface 37f has a shorter radius of curvature than that of the rear arcuate surface 37r, while the radii of curvature of the remaining upper and lower arcuate surfaces 37u and 37d are equal to each other but greater than that of the rear arcuate surface 37r; thus, the front and rear arcuate surfaces 37f and 37r are smoothly connected together by the upper and lower arcuate surfaces 37u and 37d.

Herein, the terms "front," "rear," "upper" and "lower" are used to define the direction in which the grip body 37 is attached to the handle bar 36. The grip body 37 is attached to the handle bar 36 in such a relation that the front arcuate surface 37f is located in the direction of advance of the vehicle B and the upper arcuate surface 37u is directed to the upper side of the vehicle B .

In other words, the grip body 37 is attached to the handle bar 36 in such a manner that when t|'e grip body 37 is seen laterally of the vehicle B the front arcuate surface 37f is directed forward with the longitudinal axis Y-Y being substantially horizontal.

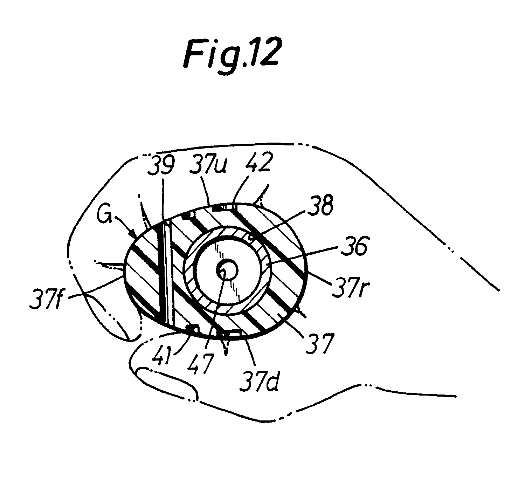

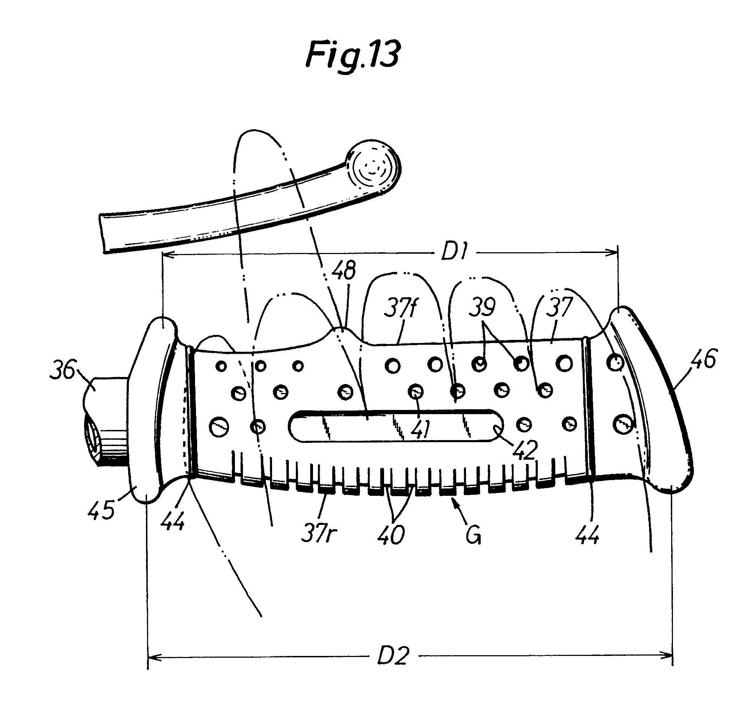

When this is considered from the positional relation to the operator's hand gripping the grip body, as suggested in Figs. 12 and 13, the second through fifth fingers, excluding the first finger (thumb), of the operator's hand encircle and contact the front arcuate surface 37f of the grip body 37 while the top finger pads of the second through fifth fingers and the first finger are applied to the lower arcuate surface 37d. On the other hand, the palm or particularly the thenar and hypothenar encircle and contact the rear arcuate surface 37r of the grip body 37 while the interdigital pads contact the upper arcuate surface 37u of the grip body 37.

However, as long as the handle grip 37 is used by being gripped in such positional relation, it may be attached to the handle bar 36 so that the major axis Y-Y of the egg-shaped grip body 37 somewhat slopes forwardly downward when seen from the side.

The height of the operator who rides on the vehicle B in a sitting posture on the seat 32 changes from person to person; thus, the grip body 37 may be attached to the handle bar 36 so that the major axis Y-Y is oriented in the direction in which it is most convenient for the operator to grip the grip body 37.

In that case, if the grip.body 37 is attached to the handle bar 36 so that the majcr axis Y-Y of the grip body 37 is directed substantially parallel with the operator's arms stretched to grip the handle bar 36, as suggested by a phantom line L-L in Fig. 1, then the operating force on the handle bar 36 can be rationally applied to the vehicle B without loss and the vehicle can be accurately oriented during steering.

The grip body 37, which has a given length and thickness as mentioned above, has an attaching port 38 extending longitudinally thereof for attachment to the section and has a smaller diameter than that of the handle bar 36. The attaching port is located on the major axis Y-Y in an eccentric position deviated by a given distance toward the rear arcuate surface 37r.

As a result, the thickness T1 of the front region defined between the inner wall surface of the attaching port 38 and the front arcuate surface 37f is greater than any of the respective thicknesses T2, T3 and T4 of the rear, upper and lower regions defined between the inner wall surface of the attaching port 38 and the rear, upper and lower arcuate surfaces 37r, 37u and 37d, respectively.

Although the thicknesses T2, T3 and T4 of the rear, upper and lower regions are shown equal in the figures, these thicknesses may be unequal provided that the thickness T1 of the front region is increased so that it is thicker than any of them.

The numeral 39 denotes a plurality of through-holes formed in said upper region in orthogonal relation to the major axis Y-Y of the grip body 37, said through-holes being spaced apart at regular intervals throughout the length of the grip body 37. Therefore, even though the whole of the grip body 37 is made of the same elastic material, the presence of the through-holes 39 distributed throughout the front region makes the elastic deformability of the front region greater than that of the other regions. The front region forms the continuous base for the front arcuate surface 37f, and the operator's fingers contact said front arcuate surface 37f, as described above; thus, the subtle movements of the fingers can be transmitted directly and effectively to the grip body 37.

More particularly, if the operator grips the front arcuate surface 37f of the grip body 37 firmly by the second through fifth fingers of his one hand, the front region will smoothly undergo elastic deformation to collapse said through-holes 39. Thus, the movements of the fingers are precisely reflected. In that case, the gripping forces exerted by the second through fifth fingers are not equal; anatomically, the gripping force exerted by the fifth finger is the lowest. Therefore, it is desirable that the diameter of the through-holes 39 be gradually increased as one end of the grip body 37 to be contacted by the fifth finger is approached so as to further increase the elastic deformability thereof.

The numeral 40 denotes a plurality of furrows formed on the rear arcuate surface 37r of the grip body 37 for preventing slippage of the operator's hand, said furrows extending parallel to each other in orthogonal relation to the longitudinal center line O-O of the attaching port 38 of the grip body 37. The furrows 40 have a given depth measured from the rear arcuate surface 37r.

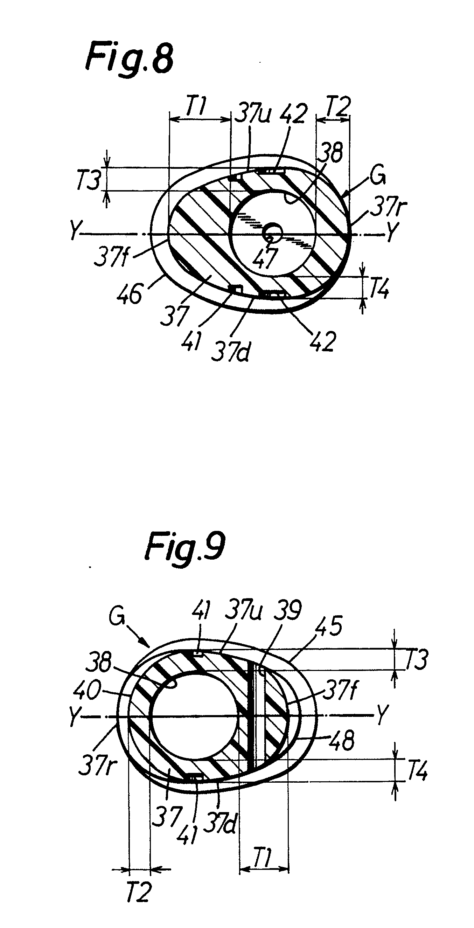

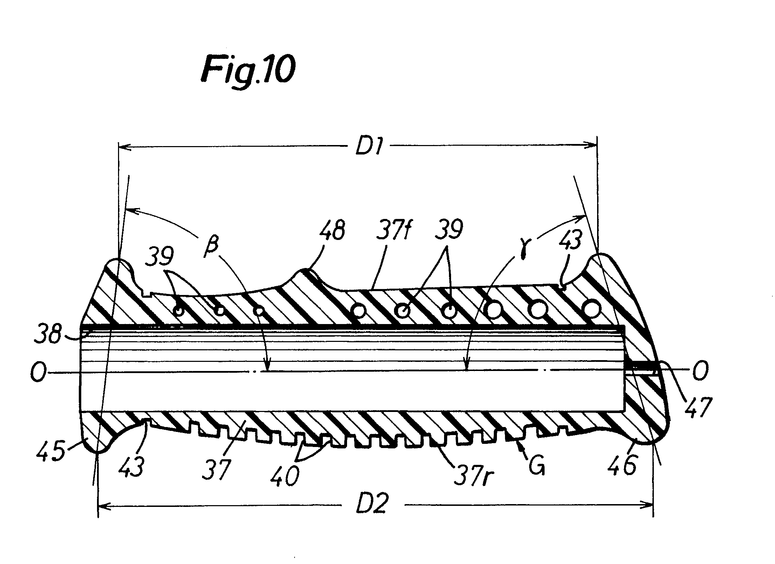

As is clear from Figs. 8 and 10, it is preferable that the thickness T2 of the rear region defined between the rear arcuate surface 37r of the grip body 37 and the inner wall surface of the attaching port 38 be gradually increased as the longitudinal middle of the grip body 37 is approached so that the rear arcuate surface 37r is in the form of a convex surface bulging rearwardly of the middle.

As a result, the palm of the operator's hand contacts the rear arcuate surface 37r as described above. Anatomically, the intermediate region between the thenar and the hypothenar of the palm consists of the recessed skin; therefore, the rear arcuate surface 37r of the grip body 37 in the form of a convex surface more intimately fits said intermediate region, a fact which means that prevention of slippage of the operator's hand and elimination of a feeling of incongruity can be attained more effectively.

The numeral 41 denote a plurality of recesses formed in the upper and lower arcuate surfaces 37u and 37d for preventing slippage of the operator's hand, said recesses having a given depth not reaching the attaching port 38, said recesses being distributed throughout. The numeral 42 denotes recessed surfaces of given depth disposed substantially in the middle portions of the upper and lower arcuate surfaces 37u and 37d and extending a given distance longitudinally of the grip body 37. A trade mark indicating the origin of the product will be impressed in such recessed surface or a seal bearing such trade mark will be bonded thereto.

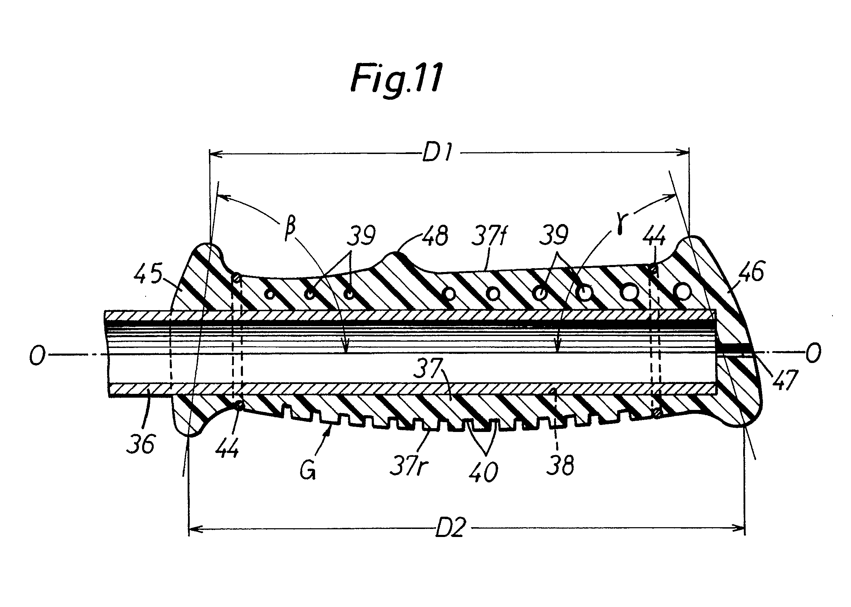

The numeral 43 denotes a pair of peripheral grooves formed in the longitudinal opposite ends of the grip body 37 and continuously circumferentially extending in orthogonal relation to the longitudinal center line O-O of the attaching port 38. Wire or band clamps 44 are fitted in said grooves to strengthen the attachment of the grip body 37 to the handle bar 36; as shown in Fig. 11.

In order to attach the grip body 37 to the handle bar 36, the attaching port 38 is forced to slide onto the handle bar 36 from its cut end, with an adhesive agent injected into the attaching port 38 in advance to fix the grip body in position. The clamps 44 will be wound around the grip body 37 to increase the fixing strength, as the need arises.

The numerals 45 and 46 denote a pair of operator's hand stopping flanges continuously bulging from the longitudinal opposite ends of the grip body 37. In the figures, they are shown having an egg shape (special ellipse), as seen in side view, similar to the cross sectional shape of the grip body 37. Although they are shown extending with a uniform height throughout from the surface of the grip body 37, they may be circular as seen in side view so long as they are effective to prevent lateral slippage of the operator's hand.

As is clear from Figs. 2, 3, 10 and 13, it is preferable that the pair of flanges 45 and 46 be disposed in the rearwardly diverging figure

$$" / \ "$$

as seen in plan view. That is, the bulging planes of the flanges 45 and 46 cross the longitudinal center line O-O of the attaching port 38 at angles $\beta$ and $\gamma$ other than right angle so that the distance D1 measured between their front edges is shorter than the distance D2 measured between their rear edges.

Anatomically, when a man's hand is opened with its fingers extending side by side in parallel relation to each other, the root region and the palm are each wider than the front region defined by the four finger tips. And if the operator grips the handle bar 36 by both hands disposed in connection with the rearwardly diverging figure

$$" / \ "$$,

this disposition provides a more comfortable handle bar gripping posture. Thus, the bulging planes of the flanges 45 and 46 arranged in the manner described above effectively match with such disposition of the operator's hands, rationally eliminating the occurrence of a feeling of incongruity.

In addition, the numeral 47 denotes a small vent hole formed in one stop flange 46 and communicating with the attaching port 38.

As shown in Figs. 3, 5, 10 and 13, a finger partitioning projection 48 continuously extends forward from an intermediate region of said front arcuate surface 37f of the grip body 37 for separating the second finger from the three of the third through fifth fingers of the hand gripping the grip body 37. Thus, the lateral slippage of the operator's hand can be prevented more reliably. This enables the operator to stably stretch the second finger of his hand gripping the grip body 37 forwardly as shown in chain lines in Fig. 13 so as to operate the brake operating lever and buzzer. In this case, this operation can be stably and smoothly performed with the third through fifth fingers and the thumb firmly gripping the grip body 37.

In this sense, in Fig. 2, a handle grip G having such finger partitioning projection 48 and a handle grip G1 devoid only of such projection 48 are prepared and the former is attached to the region of the handle bar 36 associated with the brake operating lever and buzzer. However, a pair of handle grips G each having such projection 48 may be attached to the opposite ends of the handle bar 36. Alternatively, a pair of handle grips G1 devoid only of such projection 48 may be attached to the opposite ends of the handle bar 36.

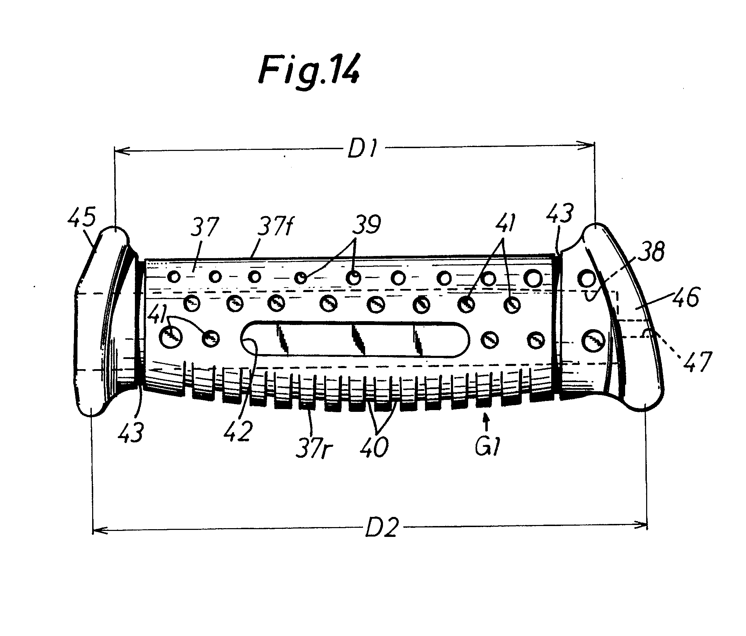

In addition, in a modification in Fig. 14 showing the handle grip G1 devoid only of a projection 48, the components corresponding to those in the handle grip G are denoted by the same reference characters. The handle grip G1 is the same in arrangement excluding the projection 48 as the basic example shown in Figs. 3 through 13.

At any rate, since the handle grip G is made from an elastic material, it can be colored in the case where it is made from a synthetic resin. It is advantageous from the standpoint of safety to use a fluorescent color for such coloration serving as a reflector since a bicycle having such handle grips fitted thereon, when traveling at night, can be more easily found by automobile drivers, helping to prevent accidents.

As can be understood from the above description, according to the arrangement of the present invention, there is provided a handle grip G to be attached to the steering handle bar 36 of a bicycle, motorcycle or other ground vehicle, including a grip body 37 made from an elastically deformable material such as synthetic resin or rubber and having a thickness and length such that it can be held by one hand, and a pair of operator's hand stopping flanges 45 and 46 of large diameter bulging continuously and integrally from the longitudinal opposite ends of said grip body, said handle grip being characterized in that the grip body 37 is egg-shaped in cross-section, having opposed front and rear arcuate surfaces 37f and 37r positioned on the major axis Y-Y, said front arcuate surface 37f being contacted by the second through fifth fingers of the operator's hand, said rear arcuate surface 37r being contacted by the palm. Further, since the radius of curvature of the front arcuate surface 37f is shorter than that of the rear arcuate surface 37r, the surface area of the grip body 37 is greater than that of a conventional article if the latter is supposed to have the same thickness as that of the grip body 37. Anatomically, it is possible to match the surface area of the grip body 37 with the bending lengths of the phalanxes.

That is, as described at the outset, man's five fingers each have a plurality of joints, and of two adjacent distances between adjacent joints, the one spaced more from the root toward the tip of each finger is shorter. Since the front arcuate surface 37f of the grip body 37 serving as a surface for contact with the second through fifth fingers is in the form of a circular arc having a shorter radius of curvature than that of the rear arcuate surface 37r, the second through fifth fingers of the operator's hand naturally and intimately fit the grip body 37; thus, the grip body can be extremely stably and firmly gripped.

Further, the cross-section of the grip body 37 is egg-shaped, and if the grip body 37 is attached to the handle bar 36 so that the major axis Y-Y is set in a forwardly downwardly sloping position directed to the imaginary extension line L-L of each of the operator's arms stretched to grip the handle bar 36, then an operating force for operating the handle bar 36 can be efficiently and accurately applied in the correct direction along the major axis Y-Y of the grip body. This arrangement is very effective in steering the vehicle B .

In this connection, with a handle grip of circular cross-section as found in a conventional article, although the gripping force can be distributed, the handle grip is not effective in intentionally changing the attitude of the vehicle B .

In the grip body 37 of the present invention, the attaching port 38 for attachment to the handle bar 36 opens at an eccentric position deviated toward the rear arcuate surface 37r along the major axis Y-Y of the egg-shaped cross-section. As a result, the thickness T1 of the front region defined between the front arcuate surface 37f and the inner wall surface of the attaching port 38 is locally made greater than the thicknesses T2, T3 and T4 of the remaining regions.

And the thickened front region is formed with a plurality of dot-like through-holes 39 substantially orthogonal to the major axis Y-Y of the grip body 37, thereby increasing the elastic deformability of the front arcuate surface 37f of the grip body 37. This surface is contacted by the second through fifth fingers of the operator's hand, and even subtle movements of the operator's hand can be directly and rationally transmitted to the grip body 37. As a result, any desired attitude of the vehicle B can be attained without requiring the wrists and arms to exert excessive forces as in the conventional article. This improves the operator's feeling of unity with the vehicle B and the response characteristic for steering.

The rear arcuate surface 37r of the grip body 37 is adapted to be contacted by the palm of the operator's hand and is formed with a plurality of operator's hand slippage preventing furrow 40 extending parallel to each other in orthogonal relation to the longitudinal center line O-O of the attaching port 38 of the grip body 37; thus, the coefficient of friction with respect to the operator's hand is increased.

If the upper and lower arcuate surfaces 37u and 37d of the grip body 37 are also formed with operator's hand slippage preventing recesses 41 which are dot-like, the operator's hand slippage preventing effect can be further enhanced since the pattern of the recesses 41 differs from the pattern of the furrows 40 in the rear arcuate surface 37r in that the recesses 41 are dot-like whereas the furrows 40 are disposed in parallel lines.

Particularly, if the thickness T2 of the rear region defined between the rear arcuate surface 37r and the inner wall surface of the attaching port 38 of the grip body 37 is gradually increased as the longitudinal middle of the grip body 37 is approached so that the rear arcuate surface 37r of the grip body 37 is in the form of a convex surface bulging rearward, then the palm of the operator's hand intimately fits the rear arcuate surface, with the result that the operating force exerted by the palm can be effectively applied to the handle bar 36. Anatomically, a man's palm bends so that the region between the thenar and the hypothenar sinks. Thus, it follows that the rear arcuate surface 37r of the grip body 37, which is in the form of a convex surface, intimately fits the sunken region of the palm.

Further, the pair of operator's hand stopping flanges bulging from the opposite ends of the grip body 37 are made in an egg shape similar to the cross sectional shape of the grip body 37 and the bulging planes of the flanges are disposed to cross the longitudinal center line O-O of the attaching port 38 of the grip body at angles other than right angle so that the distance D1 measured between their front edges is shorter than the distance D2 measured between their rear edges, thereby arranging the flanges 45 and 46 in the rearwardly diverging figure

"/\"

as seen in plan view. As a result, when the operator grips the handle bar 36 at its opposite ends, the operator's hand can be disposed in a rational position as considered from human engineering, contributing much to prevention of operator's fatigue during steering.

Further, if the grip body 37 is provided with a partitioning projection 48 continuously extending forward from an intermediate region of the front arcuate surface 37f for separating the second finger from the three of the third through fifth fingers of the operator's hand contacting said surface, this enables the operator's hand to be firmly maintained even if the operator's body is shaken, effectively preventing lateral slippage of the operator's hand. Another advantage of said partitioning projection is that it also enables the operator to stretch the second finger of his hand gripping the grip body to smoothly operate the brake operating lever and buzzer while stably gripping the grip body 37 by the three of the third through fifth fingers and thumb. Thus, this handle grip is very useful for wide use as a handle grip G which can be attached to the steering handle bar 36 of a bicycle, motorcycle or other ground vehicle, particularly as a steering handle grip G for ground vehicles adapted to travel over heavily undulating terrains.

**Claims**

1. A steering handle grip (G ) to be attached to the steering handle bar (36) of a bicycle, motorcycle or other ground vehicle, including a grip body (37) made from an elastically deformable material such as synthetic resin or rubber and having a thickness and length such that it can be held by one hand, and a pair of operator's hand stopping flanges (45, 46) of large diameter bulging continuously and integrally from the longitudinal opposite ends of said grip body, said handle grip being characterized in that:

the grip body (37) is egg-shaped in cross-section, having opposed front and rear arcuate surfaces (37f, 37r) positioned on the major axis (Y-Y), said front arcuate surface (37f) being contacted by the second through fifth fingers of the operator's hand, said rear arcuate surface (37r) being contacted by the palm,

an attaching port (38) for attachment to the handle bar (36), said attaching port opening at an eccentric position deviated toward the rear arcuate surface (47r) along the major axis (Y-Y) of said grip body (37),

wherein the thickness (T1) of the front region defined between the inner wall surface of the attaching port (38) and the front arcuate surface (37f) is greater than the respective thicknesses (T2, T3, T4) of the remaining regions, and

wherein the thickened front region is formed with a plurality of dot-like through-holes (39) substantially orthogonal to said major axis (Y-Y) of the grip body (37).

2. A steering handle grip ground vehicles as set forth in Claim 1, characterized in that:

the rear arcuate surface (37r) of the grip body (37) is formed with a plurality of operator's hand slippage preventing furrows (40) extending parallel to each other in orthogonal relation to the longitudinal center line (O-O) of the attaching port (38) of the grip body (37), and

the thickness (T2) of the rear region defined between the rear arcuate surface (37r) and the inner wall surface of the attaching port (38) of the grip body (37) is gradually increased as the longitudinal middle of the grip body (37) is approached so that the rear arcuate surface (37r) of the grip body (37) is in the form of a convex surface bulging rearward.

3. A steering handle grip for ground vehicles as set forth in Claim 1, characterized in that:

a pair of operator's hand stopping flanges (45, 46) bulging from the opposite ends of the grip body (37) have an egg shape similar to the cross sectional shape of the grip body (37),

the bulging planes of said stop flanges (45, 46) cross the longitudinal center line (O-O) of the attaching port (38) of the grip body (37) at angles (β, γ) other than right angle so that the distance (D1) measured between their front edges is shorter than the distance (D2) measured between their rear edges, thereby arranging the stop flanges (45, 46) in the rearwardly diverging figure

"/\"

as seen in plan view.

4. A steering handle grip for ground vehicles as set forth in Claim 1, characterized in that:

the grip body (37) is provided with a partitioning projection (48) continuously extending forward from an intermediate region of the front arcuate surface (37f) for separating the second finger from the three of the third through fifth fingers of the operator's hand contacting said surface.

# Fig.1

# Fig.2

EP 0 423 422 A1

# Fig.3

EP 0 423 422 A1

Fig.4

EP 0 423 422 A1

## Fig.5

## Fig.6

## Fig.7

## Fig.8

## Fig.9

Fig.10

EP 0 423 422 A1

# Fig.11

# Fig.12

EP 0 423 422 A1

Fig.13

19

Fig.14

## Fig.15 (PRIOR ART)

## Fig.16 (PRIOR ART)

## Fig.17 (PRIOR ART)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3148656 (GERDES GMBH)<br>* the whole document * | 1 | B62K21/26 |
| A | | 3 | |
| X | US-A-4308762 (J.JANNARD)<br>* column 2, lines 6 - 48; figures 1-7 * | 1 | |
| A | NL-A-7611775 (RALEIGH NEDERLAND B.V.)<br>* the whole document * | 1, 3, 4 | |
| A | DE-C-688541 (H.TSCHEBULL)<br>* the whole document * | 1 | |
| A | US-A-2666340 (K.HUNT)<br>* the whole document * | 1, 2 | |

TECHNICAL FIELDS SEARCHED (Int. Cl.5)

B62K
B25G

The present search report has been drawn up for all claims

| Place of search | Date of completion of the search | Examiner |
|---|---|---|
| THE HAGUE | 15 JANUARY 1991 | CZAJKOWSKI A.R. |